# EUROPÄISCHE PATENTSCHRIFT

(11) **EP 1 167 644 B1**
(45) Veröffentlichungstag und Bekanntmachung des Hinweises auf die Patenterteilung: **13.09.2006**
(21) Anmeldenummer: 01113951.6
(22) Anmeldetag: 08.06.2001
(51) Int. Cl.: E03F 3/04, F16L 1/06

(54) **Auflager und Verfahren zur Herstellung von Kanalleitungen, insbesondere von Abwasserkanalleitungen, unter Verwendung von Muffenrohren**
Support for spigot-socket pipes and method for producing pipelines, especially sewerage pipelines, using spigot-socket pipes
Support et procédé de fabrication de canalisations, en particulier de canalisations d'eau, avec utilisation de manchons tubulaires

(30) Priorität: 21.06.2000 DE 20010650 U
(43) Veröffentlichungstag der Anmeldung: 02.01.2002
(73) Patentinhaber: Giesler, Norbert, 34253 Lohfelden (DE)
(72) Erfinder: Giesler, Norbert, 34253 Lohfelden (DE)
(74) Vertreter: Freiherr von Schorlemer, Reinfried

(56) Entgegenhaltungen:
- DE-A- 4 023 695
- DE-A- 19 849 142
- GB-A- 2 099 953
- JP-A- 7 011 697
- JP-A- 2000 081 166

## Beschreibung

Die Erfindung betrifft ein Auflager und ein Verfahren nach den Oberbegriffen der Ansprüche 1 bzw. 16.

Die Herstellung von aus einzelnen Rohren zusammengesetzten Kanalleitungen, insbesondere Abwasserkanalleitungen, erfolgt in Abhängigkeit vom Rohrquerschnitt in der Regel nach einem von drei Verfahren, die unter den Stichworten "Rohrverlegung in Kies/Splitt-Bettung" (z.B. DIN EN 1610), "Rohrverlegung in Ortbetonbettung" (z.B. DIN 4033) und "Rohrverlegung durch maschinellen Vortrieb" bekannt sind. Für die Erfindung kommen dabei nur die beiden zuerst genannten Verfahren in Betracht, die in einer offenen Baugrube ausgeführt werden.

Muffenrohre und hierbei insbesondere Rohre aus Steinzeug mit Nennweiten von 100 bis 1 400 mm besitzen meistens einen kreisrunden, hohlzylindrischen Rohrschaft, an dessen eines Ende eine radial über ihn vorstehende Muffe angeformt ist. Die Verlegung derartiger Muffenrohre in einer Kies/Splitt-Bettung nach DIN EN 1610 erfolgt überwiegend dadurch, daß sie, an einem um sie geschlungenen Gurt oder anderen Tragelement hängend, mit einem Kran, Bagger od. dgl. in einen vorbereiteten Graben abgelassen und dann mit dem Gurt in die Muffe eines zuvor verlegten Rohrs eingezogen werden. Um dabei jeweils den notwendigen Platz für die Einlagerung der Muffe und des Gurts zu erhalten, wird die zuvor in dem Graben eingebrachte und verdichtete, untere Bettungsschicht vor dem Ablassen der Rohre mit einem Baggerlöffel od. dgl. in vorgewählten Abständen von z. B. jeweils einem Meter wieder entfernt. Dadurch bleiben bei Anwendung von Muffenrohren mit einer Länge von z. B. zwei Metern nur jeweils zwei Auflager in Form von Höckern mit einer Länge von je 0,50 m übrig.

Die bei dieser Bauweise unter den Muffenrohren entstehenden Hohlräume müssen mit der später einzubringenden oberen Bettungsschicht geschlossen werden, die die Rohre zusätzlich unterstützt. Ein solches Verfahren bedarf allerdings einer sorgfältigen Verdichtungsarbeit im Bereich der aufzufüllenden, für die Muffen und Gurte geschaffenen Hohlräume sowie im Bereich der Rohrzwickel. Ist die Verdichtung nicht ausreichend, sind spätere Rohrbrüche, Risse, Scherbenbildungen od. dgl. nahezu unvermeidlich.

Zur Vermeidung derartiger Schäden können Steinzeug-Muffenrohre auch nach der heute überholten DIN 4033 in Ortbeton verlegt werden, wobei dieses Verfahren auch beim Vorhandensein eines für Kies/Splitt-Bettungen nicht ausreichend tragfähigen Baugrunds angewendet werden kann. Die Verlegung von Muffenrohren in Ortbeton ist allerdings umstritten, weil der Ortbeton die Beweglichkeit der Muffenverbindungen und eine nachträgliche Änderung der Kanalleitung (z.B. Einbau eines Abzweigs) behindert. Eine nachträgliche Betonbeseitigung mit einem Abbruchhammer od. dgl. kann außerdem bei der kleinsten Unachtsamkeit zu Rohrschäden führen und dadurch die geplante Strecke der Rohrauswechslung vergrößern. Abgesehen davon ist die Rohrverlegung in Ortbeton bedeutend kostenintensiver als die Verlegung in einer Kies/Splitt-Bettung.

Zur Vereinfachung der Verlegung von Rohren mit außenliegender Muffe, insbesondere aus Steinzeug, und zur Vermeidung von durch unsachgemäße Verlegung bedingten Schäden sind Auflager bekannt (DE 40 23 695 C2, DD 298 144 A5), die aus massiven, fabrikmäßig hergestellten Baufertigteilen bestehen. Diese werden vor der Verlegung der Rohre hintereinander auf der Grabensohle angeordnet, wobei die Länge der Auflager bei der Verlegung von Muffenrohren kleiner als deren Länge ist, damit zwischen den einzelnen Auflagern die erforderlichen Freiräume für die Muffen entstehen. Auf ihren Oberseiten sind die Auflager mit einer über die ganze Länge erstreckten, zylindrischkonkaven, der Rohrschaftform angepaßten Rohrschaft-Auflagefläche versehen, die sicherstellt, daß der auf ihr zu liegen kommende Rohrschaft überall gleichmäßig aufliegt und umständliche Arbeiten zur Unterstopfung der verlegten Rohre und zur Verdichtung des unterstopften Materials entfallen können.

Eine ungewünschte Eigenschaft der bekannten Auflager besteht darin, daß die Muffen der Rohre in den für sie geschaffenen Freiräumen nicht oder nicht ausreichend unterstützt sind, was insbesondere beim Einziehen der muffenfreien Rohrenden in die Muffen zu Problemen führen kann. Außerdem ist es schwierig, bei der abschnittweisen Verlegung der Auflager sicherzustellen, daß diese fluchtgerecht verlegt werden und sich die Enden der nachfolgenden Auflager stets auf demselben Höhenniveau wie die ihnen zugeordneten Enden der bereits verlegten Rohre befinden, da die Enden der bereits verlegten Auflager durch die Muffen der auf ihnen abgelegten Rohre verdeckt sind und selbst die Anwendung von Laser-Meßgeräten keine Verbesserung der Ausrichtung herbeiführen kann.

Diese Nachteile ergeben sich auch bei der Anwendung von anderen bekannten Auflagern, die zusätzlich mit zur Auflage der Muffen bestimmten Endabschnitten versehen sind (JP 2000 08166 A). Hinzu kommt hier, daß diese bekannten Auflager eine Länge besitzen, die höchsten einer Hälfte der Rohrlänge entspricht, was bei unterschiedlichen Setzungen der Grabensohle unvermeidbar zu Kippmomenten und damit zu Rissen in den Rohrwandungen führt. Außerdem sind die Endabschnitte gleich lang und entsprechend einer halben Muffenlänge bemessen, wodurch sich das weitere Problem ergibt, daß nicht abwechselnd Rohre und Auflager verlegt werden können, wie dies wegen der beengten Platzverhältnisse im Kanalbau meistens erwünscht ist.

Der Erfindung liegt daher das technische Problem zugrunde, das Auflager der eingangs bezeichneten Gattung so auszubilden, daß es insbesondere den speziellen Bedürfnissen bei der Verlegung von Muffenrohren und hier vor allem bei Steinzeug-Rohren Rechnung trägt und auf einfache Weise eine höhen- und fluchtgerechte Verlegung ermöglicht. Außerdem soll das Verfahren der eingangs bezeichneten Gattung an die derart gestalteten Auflager angepaßt werden.

Zur Lösung dieser Aufgabe dienen die kennzeichnenden Merkmale der Ansprüche 1 und 16.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 eine Draufsicht auf eine aus erfindungsgemäßen Auflagern zusammengesetzte Vorrichtung zur Herstellung einer Kanalleitung;
Fig. 2 einen Schnitt längs der Linie II - II der Fig. 1 und die Seitenansicht von darauf abzulegenden Muffenrohren;
Fig. 3 eine Ansicht entsprechend Fig. 2, jedoch von einer mit den Auflagern und Muffenrohren nach Fig. 2 hergestellten Kanalleitung;
Fig. 4 eine Seitenansicht der Kanalleitung nach Fig. 3;
Fig. 5 eine perspektivische Ansicht eines erfindungsgemäßen Auflagers nach Fig. 1 bis 4 für die Muffenrohre nach Fig. 2 bis 4;
Fig. 6 eine Draufsicht auf das Auflager nach Fig. 5;
Fig. 7 bis 10 Schnitte längs der Linien VII - VII bis X - X der Fig. 6;
Fig. 9a einen Schnitt entsprechend Fig. 9 in einem vergrößerten Maßstab;
Fig. 11 eine Draufsicht auf einen mit einer Aussparung für ein Tragelement versehenen Abschnitt des Auflagers nach Fig. 5 bis 10 in einem vergrößerten Maßstab;
Fig. 12 einen Schnitt längs der Linie XII - XII der Fig. 11;
Fig. 13 einen Schnitt längs der Linie XIII - XIII der Fig. 11 und 12; und
Fig. 14 und 15 je eine Vorder- und Seitenansicht eines erfindungsgemäßen Tragelements für das Auflager nach Fig. 5 bis 10.

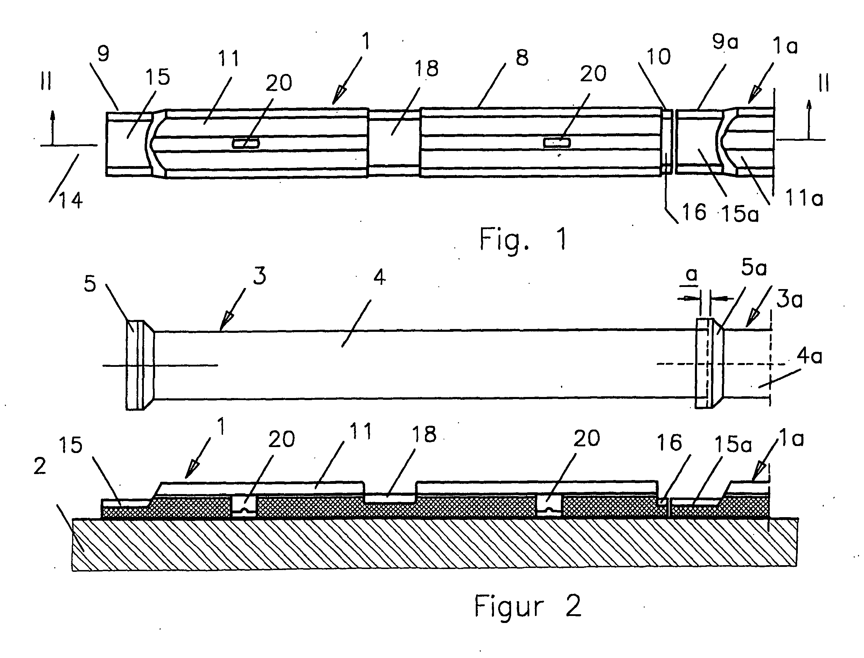

Nach Figuren 1 bis 10 bestehen erfindungsgemäße Auflager 1 und 1a aus massiven, z. B. aus Beton hergestellten Baufertigteilen. Mit besonderem Vorteil werden die Auflager 1, 1a jedoch aus Recycling-Material hergestellt, wie es z. B. beim Dualen System durch die Verwertung des Inhalts der "gelben Säcke" als Granulat anfällt. Dieses Granulat kann zur Vergrößerung der Endsteifigkeit zusätzlich mit geeigneten Kunststoffen ergänzt und als heiße Schmelze in eine entsprechende Form gegossen werden, aus der das fertige Auflager 1, 1a nach dem Erstarren der Schmelze entnommen wird. Das Auflager 1, 1a besitzt dann eine ausreichende Tragfähigkeit, um Unebenheiten in einer in Fig. 2 schematisch angedeuteten Grabensohle 2, auf der es verlegt wird, auszugleichen.

Zur Herstellung einer Kanalleitung, insbesondere einer Abwasserkanalleitung, wird eine Vielzahl der Auflager 1, 1a in an sich bekannter Weise (DE 40 23 695 C2) hintereinander längs der Grabensohle 2 verlegt, um dadurch eine zum Verlegen von Muffenrohren 3, 3a (Fig. 2 bis 4) geeignete Vorrichtung zu schaffen. Dabei weist jedes Muffenrohr 3, 3a einen Rohrschaft 4, 4a und an dessen einem Ende eine radial nach außen vorspringende Muffe 5, 5a auf. Die Verlegung der Rohre 3, 3a erfolgt z. B. derart, daß erst das Auflager 1a und das Rohr 3a verlegt werden und dann ein weiteres Auflager 1 angeschlossen wird, um dann ein auf dieses aufgelegtes weiteres Rohr 3 auf dem Auflager 1 zu verschieben und mit seinem muffenfreien Ende in die Muffe 5a des zuvor verlegten Rohrs 3a einführen zu können. Dabei sind die Auflager 1 und 1a ebenso wie die Rohre 3, 3a unter sich vorzugsweise identisch ausgebildet, so daß nachfolgend überwiegend nur das Auflager 1 und das Rohr 3 näher beschrieben werden. Bei den Muffenrohren 3, 3a kann es sich insbesondere um Steinzeugrohre handeln.

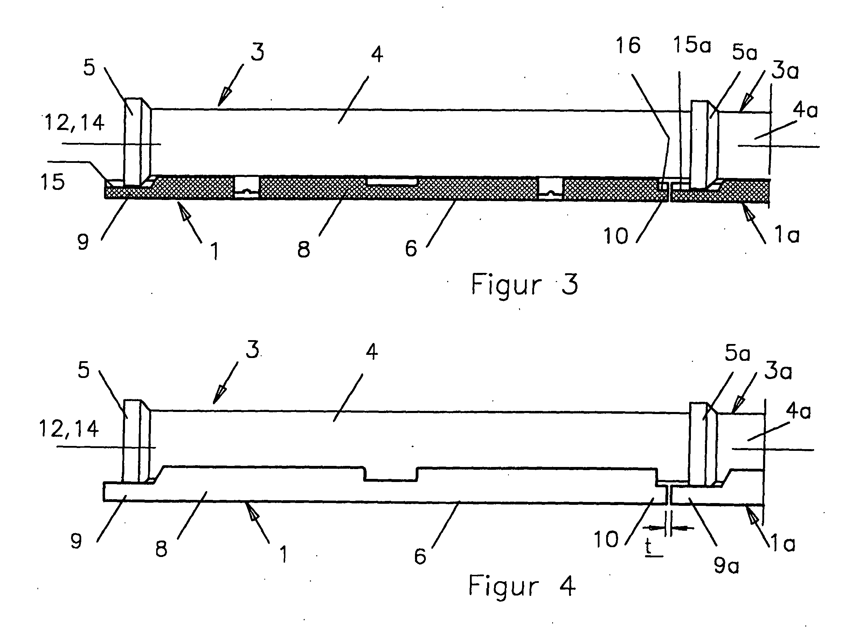

Das Auflager weist nach Fig. 4 bis 10 eine vorzugsweise durchgehend ebene, als Standfläche dienende Unterseite 6 und zwei Seitenflächen 7 auf, die zweckmäßig von der Unterseite 6 schräg nach oben und außen bis zum jeweiligen oberen Abschluß des Auflagers 1 hin ansteigen. Dadurch können Unebenheiten der Grabensohle 2 bei der nachträglichen Verfüllung des Grabens, in dem das Auflager 1 verlegt wird, auch noch durch zusätzliche Unterfüllung und Abstützung der Seitenflächen 8 ausgeglichen werden.

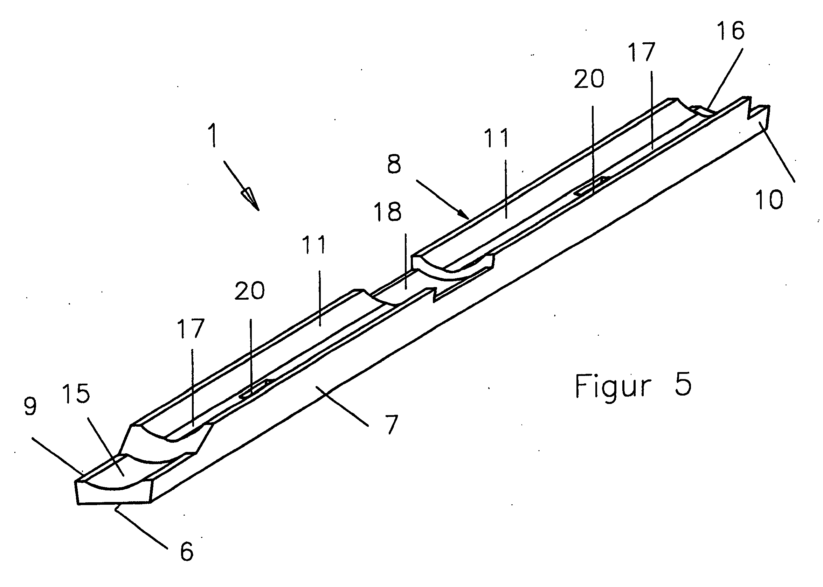

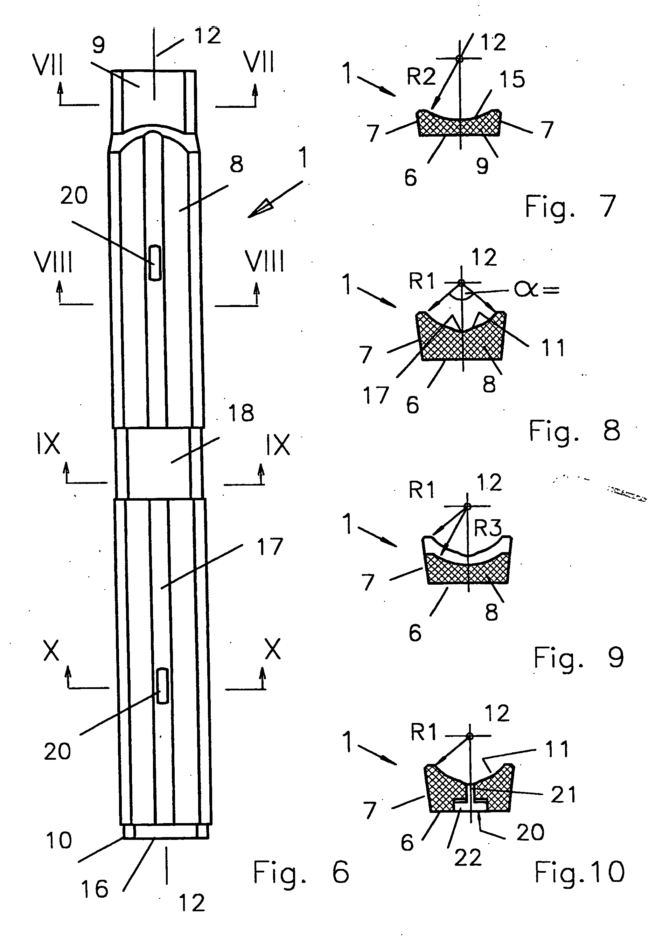

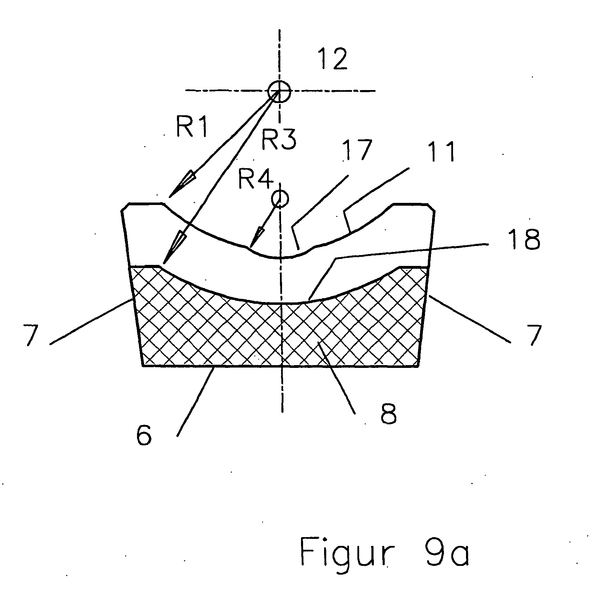

Erfindungsgemäß enthält das Auflager 1 drei in Längsrichtung hintereinander angeordnete Abschnitte (Fig. 5 und 6), nämlich einen Mittelabschnitt 8, einen ersten Endabschnitt 9 und einen zweiten Endabschnitt 10, die die Unterseite 6 und die Seitenflächen 7 gemeinsam haben. Der Mittelabschnitt 8 besitzt eine zylindrisch-konkave Oberseite 11 (Fig. 8), die eine Auflagefläche für den Rohrschaft 4 (bzw. 4a) des Muffenrohrs 3, 3a bildet und einen an den Außenradius des Rohrschafts 4 angepaßten bzw. diesem entsprechenden Radius R₁ aufweist. Dabei geht der Radius R₁ von einer gedachten Längsachse 12 (Fig. 7 bis 10) aus, die mit einer Rohrschaft-Längsachse 14 (Figuren 1, 3 und 4) zusammenfällt, wenn das Rohr 3 ordnungsgemäß auf den Auflager 1 bzw. dessen Oberseite 11 abgelegt ist, und daher nachfolgend als "Systemachse 12" bezeichnet wird.

Der Endabschnitt 9, der sich in der durch die Systemachse 12 vorgebenen Längsrichtung an das eine Ende des Mittelabschnitts 8 anschließt, ist als Muffen-Auflageabschnitt ausgebildet. Er besitzt dieselbe Unterseite 6, aber eine geringere Höhe (Fig. 7) als der Mittelabschnitt 8 und eine ebenfalls zylindrisch-konkave Oberseite 15. Diese weist jedoch, bezogen auf die Systemachse 12, einen Radius R₂ auf (Fig. 7), der an den Außenradius der Muffe 5 angepaßt ist bzw. diesem entspricht. Die Oberseite 15 (bzw. 15a) bildet dadurch eine Muffen-Auflagefläche (Fig. 2, 3), auf der die Muffe 5, 5a zu liegen kommt, wenn der Rohrschaft 4 des zugehörigen Rohrs 3 auf der Oberseite 11 des Mittelabschnitts 8 des Auflagers 1 aufliegt. Dabei kann der Radius R₂ vorzugsweise so gewählt sein, daß er um ein vorgewähltes Maß größer als der äußere Muffenradius des zu verlegenden Rohrs 3 ist, um dadurch Maßtoleranzen aus dem Rohrschaftdurchmesser auszugleichen und zu vermeiden, daß das Rohr 3 nur mit der Muffe 5 gelagert ist.

Der am in Längsrichtung entgegengesetzten Ende des Auflagers 1 vorgesehene Endabschnitt 10 ist als Höhenlage-Kontrollabschnitt ausgebildet. Zu diesem Zweck weist er vorzugsweise eine zylindrisch-konkave Oberfläche 16 auf, die eine Höhenlage-Kontrollfläche bildet und - ausgehend von der Systemachse 12 - denselben Radius R₂ wie die Oberseite 15 besitzt und daher in demselben Höhenniveau wie diese oberhalb der Unterseite 6 angeordnet ist. Dadurch ist zwischen den Oberseiten 11 einerseits und den Oberseiten 15 bzw. 16 andererseits je eine Stufe gebildet, die etwa der Höhe des über den Außenumfang des Rohrschafts 4 vorspringenden Teils der Muffe 5 entspricht. Daher ist es beim Verlegen eines Auflagers 1 auf einfache Weise möglich, dieses höhen- und fluchtgerecht anzuordnen, indem seine Höhenlage-Kontrollfläche (z.B. 16 in Fig. 2 und 3) genau auf die zugehörige Muffen-Auflagefläche (z.B. 15a in Fig. 2 und 3) des jeweils zuvor verlegten Auflagers 1a ausgerichtet wird. Dabei ergibt sich der Vorteil, daß die Oberseite 15 bzw. 15a stets sichtbar bleibt, da die Muffe 5a zwar auf ihr aufliegt, sie aber nicht nach vom abdeckt.

Die Länge des gesamten Auflagers 1, 1a entspricht vorzugsweise im wesentlichen der Länge des zugehörigen Muffenrohrs 3, 3a abzüglich einer Muffeneindringtiefe a (Fig. 2), die der Länge desjenigen Rohrschaftabschnitts entspricht, der beim Einziehen der Rohre 3, 3a in die Muffen 5, 5a in diesen zu liegen kommt. Außerdem kann die Länge der Auflager 1, 1a noch um einen zusätzlichen kleinen Sicherheitsabstand t (Fig. 4) kleiner als die Rohrlänge sein, um etwaige Längentoleranzen der Auflager 1, 1a im Stoßbereich ausgleichen zu können.

Die Längen der einzelnen Abschnitte 8, 9 und 10 des Auflagers 1 sind unterschiedlich. Wie insbesondere Figuren 2 bis 4 zeigen, ist die Länge des Endabschnitts 9 vorzugsweise etwa doppelt so groß wie die in Richtung der Systemachse 12 gemessene Länge der Muffe 5, 5a und bei Bedarf noch um einen arbeitstechnisch notwendigen Spielraum größer als dieses Maß. Dadurch ist es problemlos möglich, die Rohre 3, 3a stets so auf den Auflagern 1, 1a abzulegen, daß die Muffen 5, 5a auf den zugehörigen Oberseiten 15, 15a der Endabschnitte 9 zu liegen kommen und daß nach vorn, d. h. zum nachfolgend verlegten Auflager 1 hin, noch ein gewisser Überstand verbleibt, der es ermöglicht, die Oberseiten 16, 16a der Höhenlage-Kontrollabschnitte z. B. mit einem Laser-Meßgerät genau auf die Oberseiten 15, 15a auszurichten. Dagegen wird die Länge des die Höhenlage-Kontrollfläche 16, 16a aufweisenden Endabschnitts 10 kleiner als die Länge des Endabschnitts 9 und zweckmäßig so kurz wie möglich bemessen (vgl. z. B. Fig. 6), damit trotz des Vorhandenseins der Endabschnitte 9, 10 nur ein sehr kleiner Teil des Rohrschafts 4, 4a nicht auf den Mittelabschnitten 8, 8a der Auflager 1, 1a zu liegen kommt (vgl. Fig. 3, 4).

Wie insbesondere Fig. 8 und Fig. 9a zeigen, ist die Oberseite 11 im untersten Teil, d. h. dem Sohlbereich der Rohrschaft-Auflagefläche, vorzugsweise mit einer in Längsrichtung durchgehenden, zur Verbesserung der Rohrschaftlagerung bestimmten Vertiefung 17 mit einem Radius R₄ versehen. Ohne diese Vertiefung 17 könnte sich der Rohrschaft 4, 4a aufgrund von Durchmessertoleranzen mit Linienberührung auf die Oberseite 11 auflegen. Die Vertiefung 17 stellt dagegen sicher, daß sich ein Rohr, dessen Rohrschaft 4, 4a einen geringeren Radius als die Oberseite 11 aufweist, zumindest beidseitig von ihr stets mit Linienberührung auf die Oberseite 11 auflegt, dadurch zentriert wird und unter späterer Belastung durch Breitquetschung des Materials des Auflagers 1, 1a die negativen Eigenschaften eines Linienauflagers nicht nur halbiert sondern weiter abbaut.

Die Breite der Oberseite 11 bzw. der Rohrschaft-Auflagefläche kann z.B. durch einen Winkel α von 30° bis 180° (Fig. 8) festgelegt werden. Sie wird zweckmäßig in Abhängigkeit vom Außendurchmesser des Rohrschafts 4, 4a und der vorgegebenen Rohrbelastung im eingebauten Zustand bestimmt. Als besonders vorteilhaft haben sich Werte von 75° ≤ α ≤ 120° erwiesen, wobei Werte von α ≈ 90° derzeit für am besten gehalten werden.

Der Mittelabschnitt 8 ist, vorzugsweise in einem mittleren Bereich, mit einer quer zur Systemachse 12 erstreckten Gurt-Ausnehmung 18 versehen (Fig. 5, 6, 9, 9a). Diese hat zweckmäßig eine zylindrisch-konkave Oberfläche mit einem von der Systemachse 12 ausgehenden Radius R₃, der zumindest um soviel größer als der Radius R₁ ist, daß ein zum Ablassen und/oder Verziehen des Rohrs 3, 3a verwendeter, dieses teilweise umschließender Gurt auch noch unter dem Rohrschaft 4, 4a weggezogen werden kann, nachdem dieser auf die Oberseite 11 aufgelegt worden ist. Die Länge der Gurt-Ausnehmung 18 parallel zur Systemachse 12 ist vorzugsweise so groß bemessen, daß der Gurt auch zum Einziehen des Rohrschafts 4,4a in die Muffe 5, 5a des zuvor verlegten Rohrs 3, 3a verwendet werden kann, ohne dabei an die Endflächen der Ausnehmung 18 anzustoßen. Bei Anwendung üblicher Gurte kann die Länge der Gurt-Ausnehmung 18 z. B. 25 cm und die Differenz der Radien R₁ und R₃ z. B. 4 cm betragen, wobei die seitlichen Übergänge vom Radius R₃ zum Radius R₁ senkrecht oder unter 45° oder einem anderen Winkel geführt werden können.

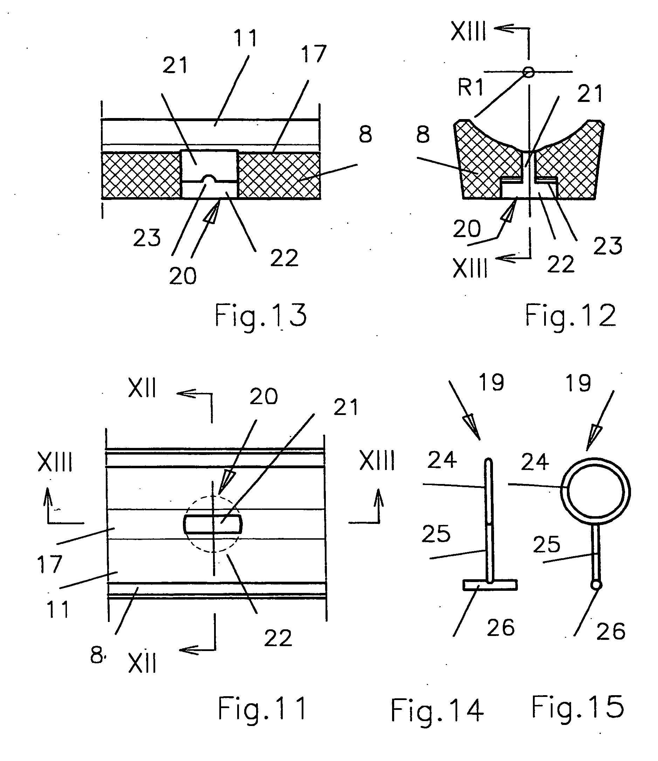

Weiter ist das erfindungsgemäße Auflager vorzugsweise mit wenigstens einer zum Einsetzen eines Tragelements 19 (Fig. 14, 15) bestimmten Aussparung 20 versehen. Im Ausführungsbeispiel (Fig. 5, 6) sind zwei solche Aussparungen 20 im Mittelabschnitt 8 vorhanden. Wie insbesondere Fig. 10 bis 13 zeigen, werden die Aussparungen 20 einerseits durch einen an die Oberseite 11 des Mittelabschnitts 8 grenzenden, parallel zur Systemachse 12 erstreckten Längsschlitz 21, andererseits durch einen von unten her an diesen angrenzenden, zylindrischen Hohlraum 22 gebildet, dessen Achse senkrecht zur Systemachse 12 steht. In einen im Übergangsbereich zwischen dem Längsschlitz 21 und dem Hohlraum 22 befindlichen Wandabschnitt ist außerdem eine quer zum Längsschlitz 21 verlaufende, nach unten offene Nut 23 (Fig. 12, 13) eingearbeitet. Alternativ können die Aussparungen 20 natürlich ganz oder teilweise in den Endabschnitten 9, 10 des Auflagers 1 ausgebildet sein.

Das Tragelement 19 besteht vorzugsweise aus Stahl und weist nach Fig. 14 und 15 eine Öse 24 und einen mit dieser verbundenen Rundstahl 25 od. dgl. auf, an dessen freiem Ende ein quer zur diesem erstreckter Knebel 28 fest angebracht ist, dessen Länge etwas kleiner als die Länge der Längsschlitze 21 ist. Das Tragelement 19 mit dem Knebel 26 kann durch den Längsschlitz 21 hindurch in den Hohlraum 22 eingeführt, dann in diesem um ca. 90° gedreht und danach durch Zug an der Öse 24 in die Nut 23 eingelegt werden. Mit einem Gehänge, welches auf der Baggerschaufel od. dgl. angehängt wird, kann nun das Tragelement 19 an seiner Öse 24 erfaßt und zum Transport des Auflagers 1 angehoben werden, wobei die Knebel 26 sicher in die Nuten 23 eingerastet bleibt.

Die als Rohrschaft-Auflagefläche ausgebildete Oberseite 11 des Auflagers 1 kann zumindest teilweise mit einem Auflagepolster versehen oder mit einem Schaumstoff (z. B. PU-Schaum) behandelt werden, um den Rohrschaft 4, 4a zu schonen und/oder durch Maßtoleranzen bedingte Unebenheiten im Bereich der Rohrschäfte 4, 4a auszugleichen. Möglich wäre auch, ein zusammendrückbares Auflagepolster aus Polystyrol od. dgl. in die Vertiefung einzukleben. Entsprechend kann die Oberseite 15 für die Muffenauflagerung behandelt werden.

Die Verlegung einer Kanalleitung mit Hilfe der beschriebenen Auflager 1, 1a und Muffenrohre 3, 3a wird im wesentlichen wie folgt vorgenommen. Nach Herstellung der mit dem erforderlichen Gefälle versehenen Grabensohle 2 (Fig. 2) wird diese mit einer ca. 4 cm dicken Sandschicht versehen, auf der dann die Auflager 1, 1a mit ihren Unterseiten 6 hintereinander angeordnet werden. Wegen der einander zugewandten Endabschnitte 9, 10 können dabei geringste, nur wenige Millimeter betragende Höhen- und Fluchtabweichungen im Stoßbereich erkannt und beseitigt werden

Beim Einbau des Auflagers 1, 1a mit Hilfe der Tragelemente 19 (Fig. 14, 15) ergibt sich der Vorteil, daß dabei auf die Tragelemente 19 einwirkende Kräfte über mögliche Drehungen der Knebel 26 um deren Längsachsen abgebaut werden. Nach dem Ablegen der Auflager 1, 1a können die Tragelemente 19 nach unten aus den Nuten 23 herausgedrückt, um ca. 90° gedreht und dann durch die Längsschlitze 21 wieder herausgezogen werden.

Die Rohre 3, 3a werden mittels eines nicht dargestellten Gurtes mit dem Bagger transportiert, in den Kanalgraben abgelassen und auf die Auflager 1, 1a abgelegt. Die Gurtschlaufe plaziert sich hierbei in der Gurtausnehmung 18.

Das Einziehen der muffenfreien Enden der Rohrschäfte 4, 4a in die Muffen 5, 5a erfolgt vorzugsweise mit Hilfe des Gurtes. Nach Herstellung der gewünschten Eindringtiefe a (Fig. 2) wird die Gurtschlaufe gelöst und durch die Gurt-Ausnehmung 18 hindurch herausgezogen.

Das nach dem Verlegen der Kanalleitung erfolgende Verfüllen des Rohrgrabens kann auf übliche Weise vorgenommen werden.

Die konkaven, mit der Vertiefung 17 versehenen Oberseiten 11 der Mittelabschnitte 8 der Auflage 1, 1a sorgen dafür, daß die Rohre 3, 3a bereits beim Aufsetzen auf die Vorrichtung in Längsrichtung ausgerichtet und in ihrer Höhen- und Seitenlage gehalten und zentriert werden. Ein Ausweichen der Rohre aus ihrer Sollachse ist daher nicht möglich. Vorteilhaft ist auch, daß auf einfache Weise eine Rohrverlegung ausschließlich von der Muffenseite der Rohre 3, 3a her möglich ist. Dadurch läßt sich die Breite der Gräben bei Rohrleitungen mit Durchmessern bis 600 mm nach DIN EN 1610 (Tabelle 1) auf OD + 0,4 m reduzieren.

Bei Anwendung der erfindungsgemäßen Auflager und des beschriebenen Verfahrens können Rohrschäden dauerhaft vermieden werden. Ein Unterstopfen der Rohre im Zwickelbereich ist nicht erforderlich. Die Handhabung der einzelnen Arbeitsgänge ist gegenüber herkömmlichen Verfahren stark vereinfacht, so daß die Bauzeiten und die Baukosten reduziert werden. Bei Anwendung von Recyclingmaterial für die Auflager 1, 1a werden außerdem natürliche Resourcen (Kies, Splitt) eingespart, und dem Dualen System wird ein neuer Anwendungsbereich erschlossen.

Die Erfindung ist nicht auf das beschriebene Ausführungsbeispiel beschränkt, das auf vielfache Weise abgewandelt werden kann. Das gilt insbesondere im Hinblick auf die beschriebenen Abmessungen und Ausgestaltungen der verschiedenen Auflagerteile. Außerdem können die Auflager auch zur Verlegung von anderen als Steinzeugrohren verwendet werden. Weiterhin können die verschiedenen Oberseiten bzw. Auflageflächen 11 bzw. 15, 16 bei Anwendung von Rohren, die andere als kreiszylindrische Außenmäntel aufweisen, mit entsprechend angepaßten Formen versehen werden. Weiter wäre es möglich, die Oberseiten 11 bzw. 15, 16 vor dem Aufsetzen der Rohre 3, 3a mit einem Gleitmittel zu bestreichen, damit die Rohre 3, 3a beim Einziehen in die Muffen 5, 5a weitgehend spannungsfrei bleiben. Auch der Höhenlage-Kontrollabschnitt könnte anders als dargestellt ausgebildet sein. Schließlich versteht sich, daß die verschiedenen Merkmale auch in anderen als den dargestellten und beschriebenen Kombinationen angewendet werden können, z. B. bei einer maschinellen Verlegung von Auflager 1, 1a und Rohr 3, 3a.

## Patentansprüche

1. Auflager für ein Muffenrohr (3, 3a), das einen Rohrschaft (4, 4a) und an einem Ende davon eine Muffe (5, 5a) aufweist, zur Herstellung von Kanalleitungen, insbesondere Abwasserkanalleitungen, bestehend aus einem massiven Baufertigteil mit einer der Länge des Muffenrohrs (3, 3a) im wesentlichen entsprechenden Länge und mit einer zylindrischkonkaven Oberseite (11), die eine Rohrschaft-Auflagefläche für das Muffenrohr (3, 3a) bildet und - ausgehend von einer Systemachse (12) - einen an den Außenradius des Rohrschafts (4, 4a) angepaßten Radius (R₁) hat, **dadurch gekennzeichnet, daß** es einen mit der Rohrschaft-Auflagefläche versehenen Mittelabschnitt (8) und zwei in Längsrichtung an diesen anschließende Endabschnitte (9, 10) aufweist, wobei der eine Endabschnitt (9) ein Muffen-Auflageabschnitt ist, der eine größere Länge als die Muffe (5, 5a) und eine zylindrisch-konkave Oberseite (15, 15a) besitzt, die eine Muffen-Auflagefläche für die Muffen (5, 5a) bildet und - ausgehend von der Systemachse (12) - einen an den Außenradius der Muffen (5, 5a) angepaßten Radius (R₂) hat, und wobei der andere Endabschnitt (10) als ein Höhenlage-Kontrollabschnitt ausgebildet ist, der eine kleinere Länge als der Muffen-Auflageabschnitt aufweist.

2. Auflager nach Anspruch 1, **dadurch gekennzeichnet, daß** der Höhenlage-Kontrollabschnitt eine zylindrisch-konkave Oberseite (16) aufweist, die eine Höhenlage-Kontrollfläche bildet und - ausgehend von der Systemachse (12) - einen an den Außenradius der Muffe (5, 5a) angepaßten Radius (R₂) hat.

3. Auflager nach Anspruch 1 oder 2, **dadurch gekennzeichnet, daß** es eine Länge besitzt, die gleich der Länge des Muffenrohrs (3, 3a) abzüglich einer Muffeneindringtiefe (a) ist.

4. Auflager nach Anspruch 1 oder 2, **dadurch gekennzeichnet, daß** es eine Länge besitzt, die gleich der Länge des Muffenrohrs (3, 3a) abzüglich einer Muffeneindringtiefe (a) und eines Sicherheitsabstandes (t) ist.

5. Auflager nach einem der Ansprüche 1 bis 4, **dadurch gekennzeichnet, daß** der Muffen-Auflageabschnitt (9) durchgehend (R₂) eine Länge besitzt, die etwa der doppelten Muffenlänge entspricht.

6. Auflager nach einem der Ansprüche 1 bis 5, **dadurch gekennzeichnet, daß** der Mittelabschnitt (8) in einem Sohlbereich seiner Oberseite (11) mit einer in Längsrichtung durchgehenden Vertiefung (17) mit einem Radius (R₄) versehen ist.

7. Auflager nach einem der Ansprüche 1 bis 6, **dadurch gekennzeichnet, daß** es mit einer Unterseite (6) und zwei von dieser schräg nach außen ansteigenden Seitenflächen (7) versehen ist.

8. Auflager nach einem der Ansprüche 1 bis 7, **dadurch gekennzeichnet, daß** sich zumindest die Oberseite (11) des Mittelabschnitts (8) über einen Auflagewinkel (α) von 30° bis 180°, vorzugweise 75° bis 120° erstreckt.

9. Auflager nach einem der Ansprüche 1 bis 8, **dadurch gekennzeichnet, daß** der Mittelabschnitt (8) in einem mittleren Bereich mit einer quer zur Systemachse (12) erstreckten Gurt-Ausnehmung (18) versehen ist.

10. Auflager nach Anspruch 9, **dadurch gekennzeichnet, daß** die Gurt-Ausnehmung (18) eine zylindrisch-konkave Oberfläche hat.

11. Auflager nach einem der Ansprüche 1 bis 10, **dadurch gekennzeichnet, daß** es mit wenigstens einer zum Einsetzen eines Tragelements (19) bestimmten Aussparung (20) versehen ist.

12. Auflager nach Anspruch 11, **dadurch gekennzeichnet, daß** die Aussparung (20) einen an die Oberseite (11) des Mittelabschnitts (8) und/oder eines Endabschnitts (9, 10) grenzenden, parallel zur Systemachse (12) verlaufenden Längsschlitz (21) und einen an diesen von unten her angrenzenden, zylindrischen Hohlraum (22) mit einer quer zur Systemachse (12) verlaufenden Achse aufweist.

13. Auflager nach Anspruch 12, **dadurch gekennzeichnet, daß** in einen Übergangsbereich zwischen dem Längsschlitz (21) und dem Hohlraum (22) eine quer zum Längsschlitz (21) verlaufende Nut (23) eingearbeitet ist.

14. Auflager nach einem der Ansprüche 1 bis 13, **dadurch gekennzeichnet, daß** es aus Recycling-Material hergestellt ist.

15. Auflager nach einem der Ansprüche 1 bis 14, **dadurch gekennzeichnet, daß** die Rohrschaft-Auflagefläche (11) und/oder die Muffen-Auflagefläche (15) zumindest teilweise mit einem Auflagepolster versehen oder mit einem Schaumstoff behandelt ist.

16. Verfahren zur Herstellung einer Kanalleitung, insbesondere einer Abwasser-Kanalleitung, unter Anwendung von Auflagern (1, 1a) nach einem oder mehreren der Ansprüche 1 bis 15 und Muffenrohren (3, 3a), die Rohrschäfte (4, 4a) und an ihren einen Enden je eine Muffe (5, 5a) aufweisen, **dadurch gekennzeichnet, daß** die Auflager (1, 1a) und Muffenrohre (3, 3a) abwechselnd nacheinander verlegt werden, indem nach der Verlegung eines Auflagers (1a) ein Muffenrohr (3a) so auf diesem abgelegt wird, daß sein Rohrschaft (4a) auf der Rohrschaft-Auflagefläche (11a) und seine Muffe (5a) unter Freilassung eines Überstandes auf der Muffen-Auflagefläche (15a) zu liegen kommt, daß dann das nächste Auflager (1) mit seinem Höhenlage-Kontrollabschnitt (10) an den Muffen-Auflageabschnitt des zuvor verlegten Auflagers (1a) angesetzt und in seiner Höhenlage auf dessen Muffen-Auflageabschnitt (9a) ausgerichtet wird, und daß dann das nächste Muffenrohr (3) in entsprechender Weise auf diesem Auflager (1) abgelegt und zur Herstellung einer Muffenverbindung in die Muffe (5a) des zuvor verlegten Muffenrohrs (1a) eingezogen wird.

17. Verfahren nach Anspruch 16, **dadurch gekennzeichnet, daß** das Verziehen der Muffenrohre (3, 3a) mit Hilfe eines diese umschlingenden Gurts erfolgt und der Gurt beim Ablegen der Muffenrohre (3, 3a) auf den Auflagern (1, 1a) in die betreffende Gurt-Ausnehmung (18) eingelegt wird.

18. Verfahren nach Anspruch 16 oder 17, **dadurch gekennzeichnet, daß** die Auflager (1, 1a) mit Hilfe von Knebel (26) aufweisenden Tragelementen (19) transportiert und abgelegt werden, indem die Knebel (26) durch die Längsschlitze (21) hindurch in die zylindrischen Hohlräume (22) eingeführt, dann in diesen gedreht und danach in die Nuten (23) eingelegt werden.

## Claims

1. Support for a spigot-socket pipe (3, 3a), which has a pipe shaft (4, 4a) and a spigot (5, 5a) at one end thereof, for the production of pipelines, in particular waste water pipelines, comprising a solid preassembled structural part with a length substantially corresponding to the length of the spigot-socket pipe (3, 3a), and with a cylindrical concave upper side (11), which forms a pipe shaft support surface for the spigot-socket pipe (3, 3a) and - extending from a system axis (12) - has a radius (R₁) adapted to the outside radius of the pipe shaft (4, 4a), **characterised in that** it has a central section (8) provided with the pipe shaft support surface and two end sections (9, 10) adjoining this in the longitudinal direction, wherein one end section (9) is a spigot support section, which has a larger length than the spigot (5, 5a) and a cylindrical concave upper side (15, 15a), which forms a spigot support surface for the spigots (5, 5a) and - extending from the system axis (12) - has a radius (R₂) adapted to the outside radius of the spigots (5, 5a), and wherein the other end section (10) is configured as a vertical position control section, which has a smaller length than the spigot support section.

2. Support according to Claim 1, **characterised in that** the vertical position control section has a cylindrical concave upper side (16), which forms a vertical position control surface and - extending from the system axis (12) - has a radius (R₂) adapted to the outside radius of the spigot (5, 5a).

3. Support according to Claim 1 or 2, **characterised in that** it has a length, which is equal to the length of the spigot-socket pipe (3, 3a) minus a spigot penetration depth (a).

4. Support according to Claim 1 or 2, **characterised in that that** it has a length, which is equal to the length of the spigot-socket pipe (3, 3a) minus a spigot penetration depth (a) and a safety distance (t).

5. Support according to one of Claims 1 to 4, **characterised in that** the spigot support section (9) continuously (R₂) has a length, which corresponds to about double the spigot length.

6. Support according to one of Claims 1 to 5, **characterised in that** in a base area of its upper side (11) the central section (8) is provided with a continuous recess (17) in longitudinal direction with a radius (R₄).

7. Support according to one of Claims 1 to 6, **characterised in that** it is provided with an underside (6) and two side faces (7) sloping upwards and outwards from this.

8. Support according to one of Claims 1 to 7, **characterised in that** at least the upper side (11) of the central section (8) extends over a bearing angle (α) of 30° to 180°, preferably 75° to 120°.

9. Support according to one of Claims 1 to 8, **characterised in that** the central section (8) is provided in a central region with a chord recess (18) extending transversely to the system axis (12).

10. Support according to Claim 9, **characterised in that** the chord recess (18) has a cylindrical concave surface.

11. Support according to one of Claims 1 to 10, **characterised in that** it is provided with at least one recess (20) intended for the insertion of a support element (19).

12. Support according to Claim 11, **characterised in that** the recess (20) has a longitudinal slot (21), which adjoins the upper side (11) of the central section (8) and/or an end section (9, 10) and runs parallel to the system axis (12), and a cylindrical cavity (22) adjoining this longitudinal slot from below and having an axis running transversely to the system axis (12).

13. Support according to Claim 12, **characterised in that** a groove (23) running transversely to the longitudinal slot (21) is machined into a transition region between the longitudinal slot (21) and the cavity (22).

14. Support according to one of Claims 1 to 13, **characterised in that** it is made from recycled material.

15. Support according to one of Claims 1 to 14, **characterised in that** the pipe shaft support surface (11) and/or the spigot support surface (15) is/are at least partially provided with a support cushion or treated with a foam material.

16. Process for the formation of a pipeline, in particular a waste water pipeline, using supports (1, 1a) according to one or more of Claims 1 to 15 and spigot-socket pipes (3, 3a), which have pipe shafts (4, 4a) and a spigot (5, 5a) at each of their ends, **characterised in that** the supports (1, 1a) and spigot-socket pipes (3, 3a) are laid alternately one after the other **in that** after laying a support (1a) a spigot-socket pipe (3a) is laid thereon in such a way that its pipe shaft (4a) comes to lie on the pipe shaft support surface (11a) and its spigot (5a) leaving an excess length on the spigot support surface (15a), that the next support (1) is then placed with its vertical position control section (10) on the spigot support section of the previously laid support (1a) and is aligned in its vertical position to its spigot support section (9a), and that the next spigot-socket pipe (3) is laid on this support (1) in a corresponding manner and is drawn into the spigot (5a) of the previously laid spigot-socket pipe (1a) to create a spigot-and-socket joint.

17. Process according to Claim 16, **characterised in that** the drawing of the spigot-socket pipes (3, 3a) occurs by means of a chord surrounding these and the chord is inserted into the respective chord recess (18) when the spigot-socket pipes (3, 3a) are laid on the supports (1, 1a).

18. Process according to Claim 16 or 17, **characterised in that** the supports (1, 1a) are transported and laid by means of support elements (19) having toggles (26) by the toggles (26) being inserted through the longitudinal slots (21) into the cylindrical cavities (22), then rotated in these and subsequently inserted into the grooves (23).

## Revendications

1. Support pour un tuyau à emboîtement (3, 3a) qui présente un tube (4, 4a) et, à l'une des extrémités de ce dernier, un manchon (5, 5a), pour fabriquer des canalisations, notamment des canalisations d'eaux usées, qui est composé d'un élément préfabriqué massif ayant une longueur équivalant essentiellement à la longueur du tube (3, 3a) et un dessus cylindrique concave (11) qui forme une surface d'appui pour le tube du tuyau à emboîtement (3, 3a) et qui possède, à partir d'un axe (12) de l'ensemble, un rayon (R₁) adapté au rayon extérieur du tube (4a, 4a), **caractérisé en ce que** le support possède un segment central (8) muni de la surface d'appui du tube et deux segments d'extrémité (9, 10) faisant suite à ce dernier dans la direction longitudinale, l'un des segments d'extrémité (9) étant un segment d'appui pour le manchon, dont la longueur est supérieure à la longueur du manchon (5, 5a) et qui possède un dessus cylindrique concave (15, 15a) qui constitue une surface d'appui pour les manchons (5, 5a) et qui possède, à partir d'un axe (12) de l'ensemble, un rayon (R₂) adapté au rayon extérieur des manchons (5, 5a), et l'autre segment d'extrémité (10) étant réalisé sous forme de segment permettant de contrôler la position en hauteur, qui est plus court que le segment d'appui pour le manchon.

2. Support selon la revendication 1, **caractérisé en ce que** le segment permettant de contrôler la position en hauteur présente un dessus cylindrique concave (16) qui forme une surface permettant de contrôler la position en hauteur et qui possède, à partir de l'axe (12) de l'ensemble, un rayon (R₂) adapté au rayon extérieur du manchon (5, 5a).

3. Support selon la revendication 1 ou 2, **caractérisé en ce qu'**il possède une longueur qui est égale à la longueur du tuyau à emboîtement (3, 3a) moins une profondeur de pénétration (a) à l'intérieur du manchon.

4. Support selon la revendication 1 ou 2, **caractérisé en ce qu'**il possède une longueur qui est égale à la longueur du tuyau à emboîtement (3, 3a) moins une profondeur de pénétration (a) à l'intérieur du manchon et une distance de sécurité (t).

5. Support selon l'une des revendications 1 à 4, **caractérisé en ce que** le segment d'appui (9) pour le manchon possède de bout en bout une longueur qui équivaut environ au double de la longueur du manchon.

6. Support selon l'une des revendications 1 à 5, **caractérisé en ce que** le segment central (8) est doté, dans une zone de son dessus (11) faisant office de semelle, d'un renfoncement (17) de rayon (R₄) qui s'étend de bout en bout dans la direction longitudinale.

7. Support selon l'une des revendications 1 à 6, **caractérisé en ce qu'**il est doté d'un dessous (6) et de deux surfaces latérales (7) remontant en en biais vers l'extérieur à partir de ce dernier.

8. Support selon l'une des revendications 1 à 7, **caractérisé en ce qu'**au moins le dessus (11) du segment central (8) s'étend sur un angle d'appui (α) compris entre 30° et 180°, de préférence entre 75° et 120°.

9. Support selon l'une des revendications 1 à 8, **caractérisé en ce que** le segment central (8) est muni dans une zone centrale d'un évidement (18) pour une sangle s'étendant transversalement à l'axe (12) de l'ensemble.

10. Support selon la revendication 9, **caractérisé en ce que** l'évidement (18) pour une sangle présente une surface cylindrique concave.

11. Support selon l'une des revendications 1 à 10, **caractérisé en ce qu'**il est doté d'au moins un évidement (20) destiné à recevoir un élément de transport (19).

12. Support selon la revendication 11, **caractérisé en ce que** l'évidement (20) présente une fente longitudinale (21) adjacente au dessus (11) du segment central (8) et/ou d'un segment d'extrémité (9, 10), et parallèle à l'axe (12) de l'ensemble, ainsi qu'une cavité cylindrique (22) adjacente au dessous de ladite fente, dont l'axe s'étend transversalement à l'axe de l'ensemble (12).

13. Support selon la revendication 12, **caractérisé en ce qu'**une rainure (23) s'étendant transversalement à la fente longitudinale (21) est ménagée dans une zone de transition entre la fente longitudinale (21) et la cavité (22).

14. Support selon l'une des revendications 1 à 13, **caractérisé en ce qu'**il est composé d'un matériau recyclé.

15. Support selon l'une des revendications 1 à 14, **caractérisé en ce que** la surface d'appui (11) du tube et/ou la surface d'appui (15) du manchon est munie au moins en partie d'un rembourrage d'appui ou est traitée avec une mousse.

16. Procédé pour réaliser une canalisation, notamment une canalisation pour les eaux usées, en utilisant des supports (1, 1a) selon l'une ou plusieurs des revendications 1 à 15 et des tuyaux à emboîtement (3, 3a) qui présentent des tubes (4a, 4a) et à chacune de leurs extrémités un manchon (5, 5a), **caractérisé en ce que** les supports (1, 1a) et les tuyaux à emboîtement (3, 3a) sont posés en alternance l'un après l'autre, dans la mesure où, après avoir posé un support (1a), on pose sur ce dernier un tuyau à emboîtement (3a) de telle sorte que son tube (4a) vienne reposer sur la surface d'appui du tube (11a) et son manchon (5a), sur la surface d'appui (15a) pour le manchon en laissant cette dernière en dépasser, **en ce qu'**ensuite, on aboute le support (1) suivant avec son segment permettant de contrôler la position en hauteur (10) au segment d'appui pour le manchon du support (1a) posé précédemment et on le positionne à la même hauteur que le segment d'appui (9a) pour le manchon dudit support posé précédemment, et **en ce qu'**enfin, le tuyau à emboîtement (3) est déposé de façon appropriée sur ledit support (1) et introduit par traction dans le manchon (5a) du tuyau à emboîtement (3a) posé précédemment pour créer un assemblage à emboîtement.

17. Procédé selon la revendication 16, **caractérisé en ce que** la pose des tuyaux à emboîtement (3, 3a) intervient à l'aide d'une sangle entourant ces derniers, et **en ce qu'**en déposant les tuyaux à emboîtement (3, 3a) sur les supports (1, 1a), la sangle vient se loger dans l'évidement (18) prévu à cet effet.

18. Procédé selon la revendication 16 ou 17, **caractérisé en ce que** les supports (1, 1a) sont transportés et déposés au moyen d'éléments de transport (19) présentant des garrots (26), dans la mesure où les garrots (26) sont introduits par les fentes longitudinales (21) dans les cavités cylindriques (22), puis sont tournés avant d'être logés dans les rainures (23).
